# EUROPEAN PATENT SPECIFICATION

(11) **EP 1 669 260 B1**
(45) Date of publication and mention of the grant of the patent: **27.02.2008**
(21) Application number: 05025571.0
(22) Date of filing: 23.11.2005
(51) Int. Cl.: B60R 21/26

(54) **Gas generator**
Gasgenerator
Générateur de gaz

(30) Priority: 10.12.2004 JP 2004358646
(43) Date of publication of application: 14.06.2006
(73) Proprietor: Daicel Chemical Industries, Ltd., Kita-ku, Osaka-shi Osaka 530-0001 (JP)
(72) Inventor: Yamazaki, Masayuki, Tatsuno-shi Hyogo (JP); Tomiyama, Shogo, Himeji-shi Hyogo (JP)
(74) Representative: Grünecker, Kinkeldey, Stockmair & Schwanhäusser Anwaltssozietät

(56) References cited:
- EP-A- 1 190 919
- US-A1- 2001 001 523
- US-A1- 2003 137 138
- US-B1- 6 315 322

## Description

### BACKGROUND OF THE INVENTION

### Field of the Invention

The present invention relates to a gas generator according to the preamble of claim 1, and to a method for manufacturing the same according to the preamble of claim 20, and more particularly to a gas generator for use in an air bag system installed in an automobile.

### Description of Related Art

A gas generator of the above type is known from JP-A-2001/097175.

A gas generator which is capable of generating a desired amount of gas arbitrarily is used conventionally in various applications such as an air bag apparatus which serves as a safety device in a vehicle, or a side thruster for a flying object including a spacecraft.

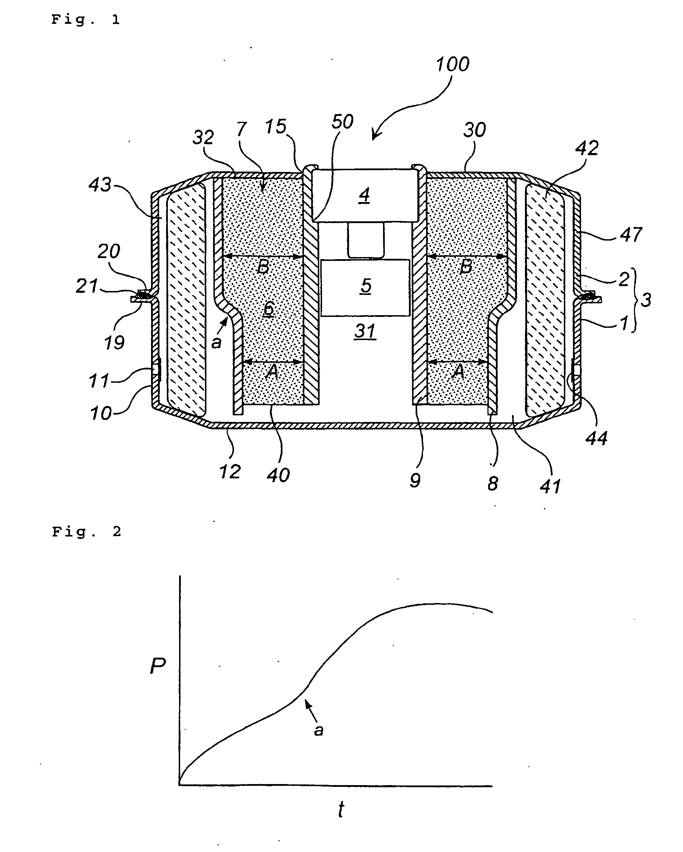

An example of a gas generator used in a side thruster or the like for a flying object including a spacecraft is disclosed in JP-A No.2002-204947. The gas generator disclosed in JP-A No. 2002-204947 is an end-face-burning type gas generator in which an end face of a gas generating agent burns. More specifically, the end surface of the gas generating agent is ignited by an igniter such that end-face-burning progresses in the direction shown by the arrow in Fig. 1 of JP-A No. 2002-204947. The generated gas is discharged from a flow hole to a gas flow pipe via a flow control valve, and is ejected to the outside through the gas flow pipe. In this gas generator, the sectional area of combustion during the combustion process is set at a substantially fixed value so that a fixed amount of combustion gas is discharged.

Meanwhile, in the case of gas generators that are used in various applications, it is sometimes desirable to be able to adjust the amount of gas that is generated during the operating period (i.e. during gas discharge) at will, depending on the application of the gas generator.

For example, in an air bag apparatus for restraining a passenger during a vehicle collision, it is desirable that the air bag be inflated in a two-stage or multi-stage process whereby the inflation speed of the air bag during an initial inflation stage is reduced to prevent an excessive impact on the passenger when the air bag deploys, and the air bag is deployed sufficiently in the latter stage. Accordingly, a gas generator (i.e. a gas generator for generating an air bag-inflating gas) which generates gas in two or more stages, such that gas is discharged slowly during the initial stage and in a sufficient amount during the latter stage, has been proposed for use in such an air bag apparatus.

JP-A No. 2001-97175 discloses a dual type gas generator in which a plurality of igniters and gas generating agents that are burned independently thereby are disposed in separate combustion chambers, and the amount of generated gas is adjusted by adjusting the ignition timing of each igniter.

### SUMMARY OF THE INVENTION

The invention also provides a gas generator containing a gas generating agent that generates a gas when burned and an ignition device for igniting and burning the gas generating agent in the interior of a housing having a gas discharge port, the gas generating agent being formed in lump form such that all or a part thereof is capable of end-face-burning, the gas generating agent taking an overall form or structure (i.e. the entirety of the gas generating agent within the space storing the gas generating agent)according to which a combustion surface area thereof varies as the gas generating agent is burned.

The invention also provides a manufacturing method for a gas generator containing a gas generating agent that generates a gas when burned and an ignition device for igniting and burning the gas generating agent in the interior of a housing having a gas discharge port, the manufacturing method comprising the steps of : charging a gas generating agent chamber with a fluid-state gas generating agent or charging a container formed by a member that comprises a gas generating agent chamber, or the interior of a container stored in the gas generating agent chamber, with a fluid-state gas generating agent; curing the fluid-state gas generating agent to form a lump-form gas generating agent having a combustion starting end surface and a form or structure according to which a combustion surface area thereof varies as the gas generating agent is burned; and incorporating the container charged with the cured gas generating agent in the interior of the housing.

### BRIEF DESCRIPTION OF THE DRAWINGS

The present invention will become more fully understood from the detailed description given hereinbelow and the accompanying drawings which are given by way of illustration only, and thus are not limitative of the present invention and wherein:

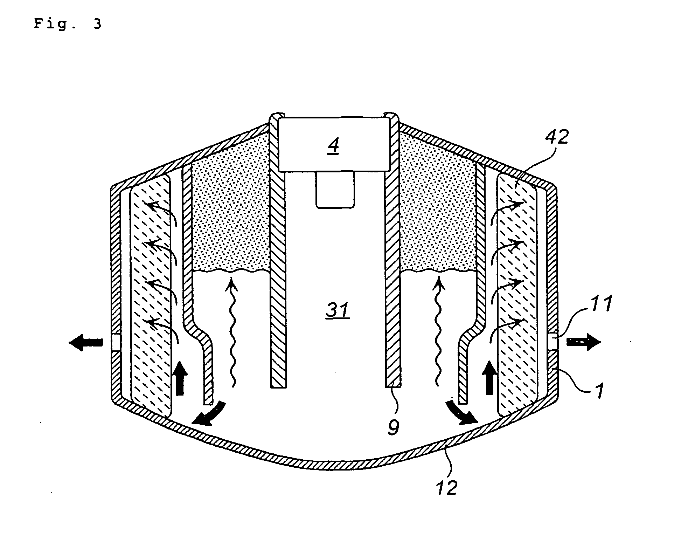

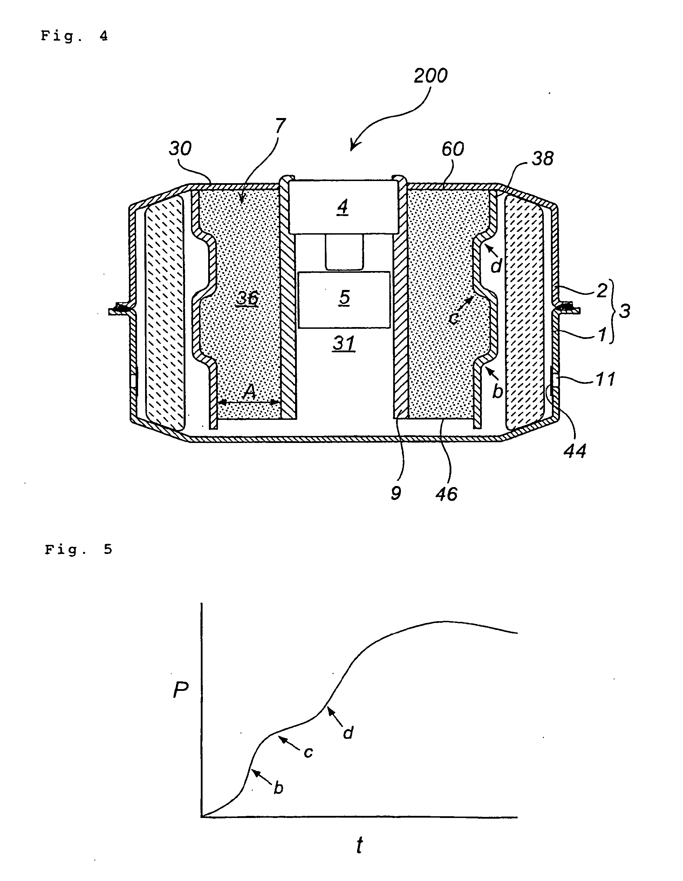

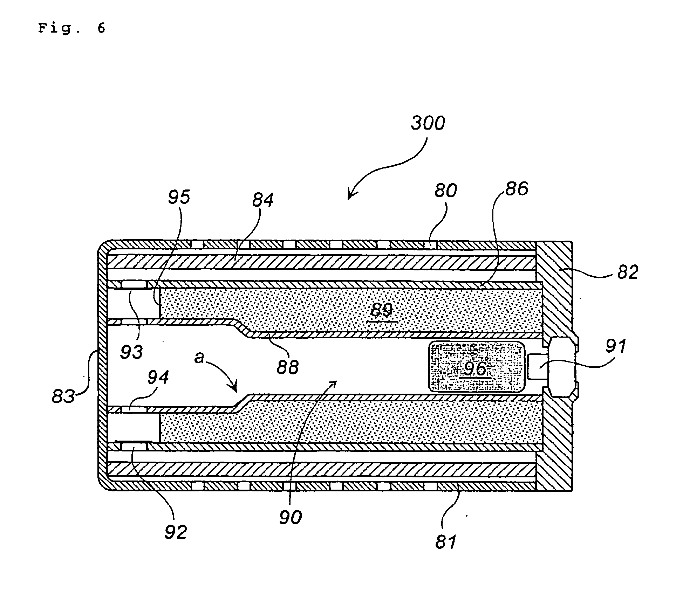

Fig. 1 shows a sectional view of a gas generator for an air bag in a preferred embodiment, Fig. 2 shows a curve of internal tank pressure when the gas generator shown in Fig. 1 is burned in a closed tank, Fig. 3 shows a sectional view during an operation of the gas generator shown in Fig. 1, Fig. 4 shows a sectional view of a gas generator in another embodiment, Fig. 5 shows a curve of internal tank pressure when the gas generator shown in Fig. 4 is burned in a closed tank, and Fig. 6 shows a sectional view of a gas generator for an air bag in another embodiment.

### DETAILED DESCRIPTION OF THE INVENTION

The present invention relates to a gas generator with which the amount of gas generated in an end-face-burning type gas generator can be varied during an operation (i.e. during gas discharge).

The present invention also relates to a gas generator in which the manufacture and internal structure of the gas generator are not increased in complexity, and the weight of the gas generator itself is not increased.

The present invention also relates to a gas generator comprising an ignition device and a lump-form gas generating agent and having a simplified internal structure, with which the amount of generated gas can be varied.

A gas generator according to the present invention realizes the aspects described above by providing a gas generator which has a simple structure and is capable of varying an amount of generated gas. In this gas generator, a gas generating agent is formed or disposed so as to perform the end-face-burning, and the combustion surface area of the gas generating agent varies during combustion process of the gas generating agent.

Furthermore, the present invention provides a gas generator containing, in the interior of a housing having a gas discharge port, a solid, lump-form gas generating agent which generates a gas when burned and an ignition device for igniting and burning the gas generating agent, wherein at least one end portion of the gas generating agent serves as a combustion starting end surface that is ignited and burned by the ignition device, the surfaces other than the combustion starting end surface are combustion-restricted such that end-face-burning progresses substantially from the one end portion toward a final end portion, and the sectional area of the gas generating agent varies in a combustion progression direction.

The gas generator according to the present invention uses a lump-form gas generating agent, and therefore has a simple internal structure. Moreover, the lump-form gas generating agent performs end-face-burning, and the combustion surface area thereof is varied over time as combustion progresses. Hence, the gas generator is capable of varying the amount of generated gas. The gas generator of the present invention which exhibits this effect may be used as a general gas generator for use in various applications, and is particularly suited to use as a gas generator for an air bag, which is a device for restraining a passenger in the event of a vehicle collision.

In this gas generator, the entirety of the gas generating agent within the space (i.e. the combustion chamber) storing the gas generating agent takes a form or structure according to which the combustion surface area thereof varies as combustion progresses, and therefore the amount of generated gas can be varied during an operation of the gas generator.

The gas generating agent used in the present invention is formed in a "lump form". In this specification, the term "lump form" indicates a form in which the end-face-burning to be described below can be performed, and a form in which end-face-burning is performed in at least one point at time during combustion of the gas generating agent. The lump-form gas generating agent is preferably provided such that approximately one to three, and a maximum of approximately ten, lumps of the gas generating agent are disposed in the gas generator, for example. However, there are no particular limitations on the number of lumps of gas generating agent used. Moreover, a large number of small-form gas generating agents such as pellets, single-perforated forms, and porous forms may be used as a part of the gas generating agent of the present invention, similarly to a gas generating agent used in a typical gas generator. However, in this case the gas generating agent should contain at least a constitutional unit which is formed in lump form so as to be capable of performing end-face-burning, and in containing this constitutional unit, the gas generating agent of the present invention differs from a conventional gas generating agent using only a large number of small-form agents such as pellets, single-perforated forms, and porous forms. When small-form gas generating agents are used in the present invention, the small-form gas generating agents are preferably disposed such that no gaps occur therebetween.

Conventional, small-form gas generating agents such as pellets, single-perforated forms, and porous forms basically perform allover burning, whereas the gas generating agent used in the present invention differs greatly from that of a conventional gas generator in that, when the gas generating agent is constructed in a plurality units, the end surface thereof burns from one end portion to the final end portion during at least one or all of the combustion stages thereof, and when the end surface is burning, the other surfaces do not burn (in other words, end-face-burning is performed).

Hence, the gas generating agent of the present invention is preferably formed partially or entirely in a lump form which fills a space for storing the gas generating agent. The lump-form gas generating agent may be formed as a single lump from the beginning, or may be formed by binding a powder or the like, or integrating a plurality of bodies. The gas generating agent of the present invention may also be formed as a plurality of gas generating agents juxtaposed with no gaps therebetween. Particularly when a plurality of gas generating agents is laminated in the combustion progression direction of the end-face-burning, a constitution is possible whereby one of adjacent gas generating agents has to burn out before the end surface of the other gas generator is exposed. Furthermore, when a plurality of gas generating agents is laminated in a direction which intersects the combustion progression direction of the end-face-burning, adjacent gas generating agents are preferably stacked tightly enough to prevent a flame or the like generated by the end-face-burning of adjacent gas generating agents from entering the gap between the gas generating agents.

For example, the gas generating agent of the present invention may be formed as a substantially cylindrical lump having a through hole or a substantially columnar lump having no through hole, and having a sufficient magnitude to fill a gas generating agent storage chamber which serves as the space for storing the gas generating agent.

Further, the gas generating agent of the present invention may employ approximately two to six disk-form gas generating agents stacked within the gas generating agent storage chamber. Note, however, that when the gas generating agents are formed in disk-form and stacked, the gas generating agents should be formed and disposed such that no grooves, gaps, or the like through which a flame can pass occur between the stacked gas generating agents, and such that end-face-burning can be achieved.

By providing a small number of lump-form gas generating agents, the thickness of each gas generating agent increases, leading to a reduction in variation of the combustion surface area caused by cracks or grinding caused by the shock of an operation of the ignition device or the like, and hence a stable performance can be maintained.

Moreover, by providing a small number of lump-form gas generating agents, gaps between adjacent gas generating agents are eliminated, and both the gas generating agent chamber and the entire gas generator itself can be reduced in size.

When the gas generating agent is provided in a single lump, the single lump of gas generating agent is disposed in the gas generating agent chamber in the interior of the housing, and hence handling of the gas generating agent during assembly is easy, weighing errors are eliminated, and the performance of the gas generating agent during an operation can be stabilized.

In the present invention, the gas generating agent formed in lump form as described above should be ignited by the ignition device upon activation of the gas generator such that end-face-burning, whereby combustion advances from the ignition point (ignition surface) toward a final end side, is performed within the space in which the gas generating agent exists (i.e. the gas generating agent chamber space or the combustion chamber). Accordingly, the gas generating agent formed in lump form as described above should be ignited such that combustion begins from one end portion (the combustion starting end surface) thereof, and such that combustion does not progress from any surface other than the one end portion (surfaces other than the combustion starting end surface). Here, the combustion starting end surface denotes the surface (or part) of the gas generating agent that is ignited first, and generally corresponds to one of the end surfaces of a gas generating agent formed in lump form. Which end face corresponds to the combustion starting end surface is determined on the basis of the manner in which the gas generating agent is disposed, its positional relationship with the ignition device, and so on.

In the present invention, to ensure that combustion begins from the one end portion (the combustion starting end surface), the ignition device for igniting the gas generating agent should be disposed facing the one end portion (combustion starting end surface) from which combustion of the gas generating agent begins, and if not directly facing this one end portion, then the ignition device should be disposed such that the high-temperature gas and flame that are combustion products of the ignition device reach the one end portion (combustion starting end surface) of the gas generating agent.

An electric igniter that is activated by an ignition current may be used alone as the ignition device, or to enhance the explosive power of the electric igniter, a typically-employed transfer charge (boron niter or the like) may be used alongside the igniter. There are no particular limitations on the type and specifications of the transfer charge as long as it increases the explosive power of the igniter and causes combustion of the gas generating agent.

Further, in the present invention, to ensure that combustion does not progress from surfaces of the gas generating agent other than the one end portion (surfaces other than the combustion starting end surface), combustion of the surfaces other than the combustion starting end surface should be restricted, and these surfaces should not be ignited by the ignition device.

To restrict combustion of the surfaces other than the combustion starting end surface, a combustion restricting member(s) which restricts combustion of the gas generating agent by enveloping the surfaces other than the combustion starting end surface may be employed. As the combustion restricting member, there may be employed a component for defining the gas generating agent chamber within the housing, a component which defines the gas generating agent chamber within the housing and also constitutes the housing (these components will be referred to together as "gas generating agent chamber constitutional components" hereafter), or a separate container which envelops the surfaces of the gas generating agent other than the combustion starting end surface.

The combustion restricting member is formed from a material and with a thickness that prevents direct contact between the combustion products generated by the ignition device and all surfaces of the gas generating agent other than the one end portion (combustion starting end surface), and preferably a material and thickness that prevent ignition of all surfaces of the gas generating agent other than the one end portion (combustion starting end surface) by heat transfer and radiation during combustion of the gas generating agent from the one end portion (combustion starting end surface) to the final end portion. For example, the combustion restricting member may be formed using a material such as stainless steel, iron, or aluminum, at a thickness (1mm, for example) which satisfies the above conditions. The combustion restricting member formed in this manner is disposed to envelop all surfaces of the gas generating agent other than the combustion starting end surface, and preferably in contact with and tightly attached to these surfaces.

For example, when the gas generating agent takes a single-perforated cylindrical form having a through hole in its center, an inner tube which covers the inner peripheral surface of the through hole and an outer tube which covers the outer peripheral surface of the gas generating agent are used as the member forming the gas generating agent chamber (the combustion restricting member), and the gas generating agent is disposed in the interior of the housing in contact with these tubes. On the other hand, when the gas generating agent takes a columnar form having no through hole in its center, a tube covering the outer peripheral surface of the gas generating agent is used as the member forming the gas generating agent chamber (the combustion restricting member), and both the gas generating agent and the tube are disposed in the interior of the housing such that the gas generating agent contacts the tube. In so doing, combustion of the gas generating agent does not progress from the surfaces which contact the inner tube and outer tube, or the surface which contacts the tube, and hence end-face-burning is maintained.

The term "inner tube" in this specification denotes a cylindrical member defining the inside of the gas generating agent storage chamber, and the terms "outer tube" and "tube" denote a cylindrical portion defining the outside of the gas generating agent storage chamber. All of these tubes cover the surfaces of the gas generating agent other than the combustion starting end surface, and are therefore capable of functioning as the combustion restricting member.

Note that in order to simplify the internal structure of the gas generator of the present invention, a single ignition device is preferably provided. However, this does not exclude the use of two or more ignition devices, and when two or more ignition devices are used, the plural ignition devices are disposed to ignite and burn a common end surface of the same gas generating agent. Hence, even when plural ignition devices are used, the gas generator of the present invention differs from a conventional dual-type gas generator in which the ignition device each ignites individual gas generating agents, in that the ignition devices ignites and burns a common end surface of the same gas generating agent.

In the present invention, as described above, the gas generating agent performs end-face-burning whereby combustion progresses from one end portion (the combustion starting end surface) to the final end portion. The gas generating agent is preferably formed such that the combustion surface progresses in a substantially identical manner regardless of the location on the gas generating agent, and such that combustion progresses in the same direction.

This end-face-burning gas generating agent takes a form or structure according to which the combustion surface area thereof (in other words, the surface area of the burning part of the gas generating agent) varies as the combustion goes on. Therefore, the amount of gas generated per unit time can be varied, and as a result the air bag inflation timing and degree of inflation can be optimized.

In other words, in the gas generator of the present invention, the gas generating agent performs end-face-burning, and the combustion surface area thereof varies during combustion. Therefore, the amount of gas generated per unit time can be adjusted at will. In cases such as when the air bag inflation speed is to be suppressed at the initial stage of the air bag operation to prevent excessive impact on the passenger, and the air bag is then to be inflated far enough to obtain sufficient restraint, for example, the gas generator should generate gas gently at the initial stage, and then generate a sufficient amount of gas at the latter stage. When gas is to be generated in this manner, the sectional area of the burning part of the gas generating agent may be reduced in the initial stage to reduce the amount of generated gas, and when combustion has progressed by a fixed distance, the sectional area may be increased so that a larger amount of gas is generated.

For example, when the gas generating agent is formed in a lump form having no cavities or the like in its interior, the surface perpendicular to the combustion progression direction serves as the end-face-burning combustion face, and the sectional area thereof (the combustion sectional area) corresponds to the combustion sectional area of the end-face-burning. Hence, the amount of generated gas is commensurate with the sectional area of the surface perpendicular to the combustion progression direction. Accordingly, by varying the sectional area of the surface perpendicular to the combustion progression direction of the gas generating agent, the combustion surface area varies as combustion progresses, and as a result, the amount of generated gas can be adjusted in accordance with the variation in the sectional area.

On the other hand, when the gas generating agent includes interior cavities or the like, these cavities are exposed as combustion progresses, and the combustion surface area varies in accordance with the exposed cavity. Hence, the amount of generated gas varies in accordance therewith. Therefore, in this case, the amount of generated gas can be adjusted at will by adjusting the form, formation extent (the proportion of cavities), and so on of the cavities existing in the interior of the lump-form gas generating agent.

The gas generating agent of the present invention takes a lump-form, and may also be formed in a single-perforated form having a through hole opened in the center thereof, or a columnar form having no through hole, for example. When the gas generating agent is formed in this substantially cylindrical or substantially columnar form and the end surface thereof is ignited so as to prevent the inner and outer peripheral side faces from burning (to maintain end-face-burning), the variation in the sectional area which intersects the axial direction of the substantially cylindrical or substantially columnar gas generating agent matches the mass flow as an inflator. Hence in this case, by adjusting the sectional form of the gas generating agent, the operating performance of the gas generator (the manner in which the air bag is inflated) can also be adjusted arbitrarily. When the gas generating agent takes a single-perforated cylindrical form having a through hole in its center, the inner peripheral surface of the through hole is covered by the inner tube, and the outer peripheral surface of the gas generating agent is covered by the outer tube, or when the gas generating agent takes a columnar form having no through hole and the outer peripheral surface thereof is covered by the tube, the operating performance of the gas generator (the manner in which the air bag is inflated) can be adjusted theoretically in any way by adjusting the sectional form of the gas generating agent formed by the inner tube and outer tube or the tube. Note that the form of the sectional area of the gas generating agent is not limited to the circle described above, and may take a polygonal form (also, a through hole may be formed regardless of the sectional form).

In the present invention, the combustion surface area of the gas generating agent can be varied in the combustion progression direction by varying at least one of the outer diameter of the inner tube and the inner diameter of the outer tube in the axial direction to adjust the sectional area of the gas generating agent, or by varying the inner diameter of the tube in the axial direction to adjust the sectional area of the gas generating agent. Accordingly, the gas generator exhibits simple combustion control.

Moreover, in the gas generator of the present invention, the housing preferably includes a ceiling plate, a base plate on which the ignition device is disposed, and a peripheral wall portion connecting the ceiling plate and base plate, the ignition device is preferably disposed in the interior of a member forming an inner peripheral side wall of a gas generating agent chamber, the gas generating agent is preferably disposed so that the axis thereof overlaps the axis of the housing, and the combustion starting end surface is preferably formed on the ceiling plate side.

The inner tube serves as the member forming the inner peripheral side wall of the gas generating agent chamber, and by employing the interior of the inner tube as the ignition device storage chamber storing the ignition device, the ignition device can be prevented from protruding from the inflator, and the overall height of the inflator can be suppressed.

Furthermore, in the gas generator of the present invention, the lump-form gas generating agent having a form or structure according to which the combustion surface area thereof varies during combustion is preferably formed by charging the gas generating agent storage chamber (the space between the inner tube and outer tube, or the interior of the tube, for example) with a fluid-state gas generating agent and then curing the gas generating agent, or by charging a container serving as the member that forms the gas generating agent chamber, or the interior of a container accommodated the gas generating agent chamber, with a fluid-state gas generating agent and then curing the gas generating agent. Particularly in a case where a fluid-state gas generating agent is cured in a container serving as the member that forms the gas generating agent chamber or the interior of a container accommodated the gas generating agent chamber, the container accommodating the cured gas generating agent should be incorporated into the interior of the housing.

A "fluid state" indicates a liquid, powder, colloid, or the like, for example, and by charging the interior of the gas generating agent storage chamber (in other words, the combustion chamber) with a gas generating agent in this state, and then subjecting the gas generating agent to a method such as drying, reactive curing, compression, or gelation, the gas generating agent can be formed into a solid or colloidal block having a substantially cylindrical shape, a substantially columnar shape, or an arbitrary polygonal shape or angled cylindrical shape.

Further, the gas generating agent in the gas generator of the present invention preferably uses one or a mixture of fuels selected from RDX, HMX, 5-nitrotetrazole, 1H-tetrazole, 5-aminotetrazole, 1H-tetrazole-1, 5-diamine, guanidine nitrate, mono-amine guanidine nitrate, carbodihydrazide, triamine guanidine nitrate, 1, 2, 4-triazole-3-on, 5, 5'-bi-1H-tetrazole, dicyandiamide, azodicarbonamide, glycine, semicarbazone, 1H-1, 2, 4-triazole-3, 5-diamine, 4-amino guanazole, and guanylurea nitrate, and preferably uses one or a mixture of oxidants selected from potassium perchlorate, ammonium perchlorate, sodium perchlorate, strontium perchlorate, potassium nitrate, ammonium nitrate, sodium nitrate, and strontium nitrate.

The gas generating agent used in the present invention differs from a conventional gas generating agent, in which all of the used gas generating agents (a plurality of gas generating agents such as pellets or single-perforated forms) burn in a substantially overall burning state, in that the gas generating agent is formed in lump form and performs end-face-burning. Therefore, a gas generating agent that has the best possible ignitability and combustion performance is preferably used. Accordingly, the burning rate of the gas generating agent under 10MPa of pressure is preferably not less than 30mm/sec.

Furthermore, a combustion accelerator is preferably mixed into and dispersed throughout the gas generating agent. One of the following combustion accelerators (i) and (ii) may be used as the combustion accelerator:
(i) a combustion accelerator which contributes directly to combustion of the gas generating agent by burning itself in order to further raise the combustion temperature; and
(ii) a combustion accelerator which does not contribute directly to combustion of the gas generating agent, but provides conditions for accelerating combustion.

An example of the combustion accelerator described in (i) is a conventional boron niter or a gas generating agent using nitroguanidine or the like as a fuel and strontium nitrate or the like as an oxidant, which creates an environment with a higher combustion temperature than the gas generating agent (the original gas generating agent) into which the combustion accelerator is mixed and dispersed.

An example of the combustion accelerator described in (ii) is a microcapsule, which is a hollow micro-particle, the combustion surface area of which increases at one of the combustion stages of the gas generating agent(the original gas generating agent) into which the combustion accelerator is mixed and dispersed, thereby accelerating combustion. The microcapsule is preferably formed to burn out or split open as the gas generating agent burns.

The combustion accelerator may also be formed to contain metallic particles.

A combustion accelerator such as that described above, which is used to accelerate combustion of the gas generating agent, preferably has an average particle diameter between 1 to 1000 µm, and more preferably between 3 and 500µm. More particularly, the particle diameter per particle of the combustion accelerator is preferably between 1 to 1000µn, and more preferably between 3 and 500µm.

In accordance with the above, as the gas generating agent of the present invention, such a gas generating agent may be used that contains 40% by weight of RDX as a fuel, 58% by weight of potassium perchlorate as an oxidant, 1% by weight of sodium carboxymethyl cellulose as a molding binder, and 1% by weight of plastic microcapsule as the combustion accelerator.

Further, the gas generating agent used as the gas generating agent of the present invention is preferably provided with a reinforcing member for preventing irregularities such as cracks and chips occurring in the combustion starting end surface of the gas generating agent due to shock generated by the impact of an operation of the inflator (an operation of the ignition device) or when the inflator is dropped. The reinforcing member is formed by adhering a film or a porous thin plate to the combustion starting end surface, or coating the combustion starting end surface with a hardening resin or the like. By preventing cracks and chips in the gas generating agent, a stable performance can be maintained without variation in the surface area of the end surface. A device such as a film member provided on the combustion starting end surface of the gas generating agent, or a resin material applied to the combustion starting end surface of the gas generating agent through coating or impregnation and then cured, may be used as the reinforcing member.

Further, an ignition aid including a material having greater ignitability than the gas generating agent is preferably provided on the combustion starting end surface of the gas generating agent. A film-form member coated on one surface or both surfaces thereof with a transfer charge, a porous thin plate member impregnated with a black powder such as boron niter, or a slurry-form substance mixed with an explosive and cured on the combustion starting end surface of the gas generating agent may be used as the ignition aid. The ignition aid may also be formed to function as a reinforcing member for preventing the occurrence of cracks or chips on the combustion starting end surface of the gas generating agent caused by shock when the inflator is dropped and so on. By providing this ignition aid, ignition of the gas generating agent by the ignition device can be assisted.

In the gas generator according to the present invention, the explosive used in the ignition device is preferably mixed into and dispersed through the lump-form gas generating agent as a combustion accelerator which contributes directly to combustion of the gas generating agent by burning itself in order to further raise the combustion temperature. This transfer charge includes mainly a black powder such as boron niter, for example, and has greater ignitability than the gas generating agent so that the ignitability of the gas generating agent can be improved by mixing and dispersing the transfer charge into the gas generating agent.

Further, a gas generating agent having a high combustion temperature may be used as the ignition aid, and this ignition aid may be provided on the combustion starting end surface of the gas generating agent.

According to the gas generator of the present invention, a solid, lump-form gas generating agent is used, and combustion progresses from one end portion thereof to a final end portion while the combustion surface area varies during combustion. As a result, the amount of gas generated per unit time can be varied easily. Particularly when the surfaces of the gas generating agent other than the end surface are covered by a constitutional member of the gas generating agent chamber in order to maintain end-face-burning, the amount of generated gas can be controlled by adjusting the sectional area formed by this constitutional member. Hence, the gas generator has a simple internal structure, is easy to assemble, and has an operating performance that can be controlled easily. Furthermore, in order to achieve end-face-burning, the gas generating agent contains a small number of lumps, and no gaps occurs between the gas generating agents. Therefore, the overall size of the gas generator can be reduced.

As above shown, the present invention relates to a gas generator, and more particularly to a gas generator which is suitable for use in an air bag system installed in an automobile.

### Embodiments of the invention

Embodiments of the present invention will be described below on the basis of the drawings. Fig. 1 is a sectional view of a gas generator for an air bag in an aspect in which the present invention is applied to a gas generator for an air bag for a driver side.

A gas generator 100 of this embodiment contains a housing 3 having a diffuser shell 1 and a closure shell 2, an ignition device, or more specifically an igniter 4 and a transfer charge 5, disposed in a storage space inside the housing 3, a gas generating agent 6 which is ignited and burned by the ignition device to generate combustion gas, and an outer tube 8 and an inner tube 9 which define a combustion chamber 7 in which the gas generating agent 6 is stored.

The diffuser shell 1 is formed by pressing a stainless steel plate, and includes a circular portion 12, a peripheral wall portion 10 formed in the outer peripheral portion of the circular portion 12, and a flange portion 19 which extends radially outward from the tip end portion of the peripheral wall portion 10. Sixteen gas discharge ports 11 having a diameter of 3mm in this embodiment are arranged with equal intervals circumferentially in the peripheral wall portion 10. An ignition device storage chamber 31 is formed on the inside of the inner tube 9, and the igniter 4 and transfer charge 5 are disposed inside the ignition device storage chamber 31.

The closure shell 2 is formed by pressing a stainless steel plate, and includes a circular portion 30, a central hole 15 formed in the center of the circular portion 30, a peripheral wall portion 47 formed in the outer peripheral portion of the circular portion 30, and a flange portion 20 which extends radially outward from the tip end portion of the peripheral wall portion 47. The inner tube 9 is disposed to be fitted into the central hole 15. The inner tube 9 includes a stepped portion 50 which engages with the igniter 4, but is formed as a pipe with a fixed thickness and a fixed diameter in the other portion.

The housing 3 is formed as follows: the respective flange portions 19 and 20 of the diffuser shell 1 and closure shell 2 are superimposed on each other and welding 21 is performed, and further the inner tube 9 is welded to the central hole 15 of the closure shell. The tip end (on the diffuser side) of the inner tube 9 is disposed away from the diffuser.

The outer tube 8 defining the outer peripheral surface of the combustion chamber 7 is joined, by welding, to the circular portion 30 of the closure 2 at one end, while the opposite end portion (on the diffuser side) is slightly removed from the circular portion 12 of the diffuser 1 and left in a non-welded state. Further, the outer tube 8 takes a pipe form having a constant thickness, but varies in diameter at the part denoted by "a" in Fig. 1.

A single gas generating agent 6 formed in lump-form is disposed in the combustion chamber 7. The gas generating agent is a hollow columnar body disposed such that the inner peripheral surface and outer peripheral surface thereof contact the inner tube 9 and outer tube 8, respectively. The gas generating agent is also disposed such that a closure side end portion 32 thereof contacts the circular portion 30 of the closure shell, while a diffuser side end portion 40 thereof is removed from the circular portion 12 of the diffuser shell. In other words, the space to which the diffuser side end portion 40 of the gas generating agent 6 is exposed communicates with the ignition device storage chamber 31.

The gas generating agent of this embodiment has favorable ignitability, and is formed from 40% by weight of RDX as a fuel, 58% by weight of potassium perchlorate as an oxidant, 1% by weight of sodium carboxymethyl cellulose as a molding binder, and 1% by weight of plastic microcapsule as a combustion accelerator. The gas generating agent used in this embodiment has 32mm/sec of the linear burning rate under the pressure of 10MPa.

The gas generating agent is formed by stirring and melting 1% by weight of carboxymethyl cellulose ("CMC DAICEL #2260" produced by Daicel Chemical Industries Ltd.) into 50% by weight of ion-exchanged water at a controlled temperature of 40°C so that the two substances are mixed evenly. Once the two substances are mixed evenly, 40% by weight of RDX (a powder produced by Nippon Koki Co. , Ltd.), 58% by weight of potassium perchlorate ("KPD2" produced by Japan Carlit Co., Ltd.), and a plastic microcapsule ("MYS F-80E" produced by Matsumoto Yushi-Seiyaku Co., Ltd.) are introduced, and the mixture is stirred for another hour until mixed evenly. The mixture is then left to cool to ambient temperature, whereby a colloidal, hydrous gas generating composition is obtained. A predetermined amount of the composition is charged into an inflator container and dried for twenty-four hours at 110°C to form a molded product.

A coolant/filter 42 is arranged to surround the outer tube 8, defining an annular chamber 41 on the periphery of the tube. The coolant/filter 42 is formed by radially laminating a stainless steel plain stitch wire mesh and compressing the laminated wire meshes in the radial direction and axial direction. With the coolant/filter 42, the combustion gas generated by combustion of the gas generating agent 6 is cooled, and the combustion residue contained therein is trapped.

A gap 43 is formed between the peripheral wall portions 10, 47 of the housing and the coolant/filter 42. The gap 43 forms a gas passage having an annular radial cross-section on the periphery of the coolant/filter 42. Thus the combustion gas passes through the entire portion of the coolant/filter, enabling effective use of the coolant/filter and effective cooling and purification of the combustion gas. The cooled and purified combustion gas passes through the gas passage to the gas discharge ports 11 in the diffuser shell.

The gas discharge ports 11 in the diffuser shell are sealed by an aluminum tape 44 to prevent the infiltration of external moisture into the interior of the housing 3.

Next, operation of the gas generator shown in Fig. 1 is described. When the vehicle collides, a sensor (not shown) senses the impact and transmits a signal to a control unit (not shown). The control unit analyzes the signal, and having determined that the signal indicates an impact, transmits an activation signal to the igniter 4. Thus the igniter 4 is activated and generates high-temperature gas, a flame, a shock wave, and so on.

Upon reception of the high-temperature gas, flame, shock wave, and so on, the transfer charge 5 ignites and burns, generating a flame, high-temperature gas, high-temperature thermo-particles, and so on ("combustion products" hereafter). In the gas generator shown in the drawing, the diffuser side end portion 40 of the gas generating agent 6 communicates with the ignition device storage chamber 31, and therefore the combustion products generated inside the ignition device storage chamber 31 ignite the end portion 40 of the gas generating agent 6. Note that the outer peripheral portion and inner peripheral portion of the gas generating agent 6 contact the outer tube 8 and inner tube 9 respectively, and the opposite end portion 32 contacts the circular portion 30 of the closure shell 2, and therefore combustion does not occur from the surfaces of the gas generating agent 6 that contact these members. Hence the gas generating agent 6 performs end-face-burning which progresses from the end portion 40 toward the opposite end portion 32.

Furthermore, the inner diameter of the outer tube 8 varies in the axial direction, and therefore the gas generating agent 6 used in the gas generator shown in Fig. 1 has a sectional area (sectional area A) which corresponds to the diameter denoted by the reference symbol "A" on the diffuser shell 1 side. Meanwhile, the inner diameter of the outer tube 8 increases at the curved portion "a" so that the gas generating agent 6 has a sectional area (sectional area B) which corresponds to the diameter denoted by the reference symbol "B" on the closure shell 2 side (sectional area A < sectional area B). Hence, as combustion progresses from the end portion 40 to the opposite end portion 32, gas is generated in accordance with the sectional area, leading to an increase in the amount of gas generated per unit time at the curved portion "a".

Fig. 2 is a graph of a curve ("tank curve" hereafter) showing variation over time in the internal pressure of a sealed tank having a fixed volume (60 liters, for example) when the gas generator in Fig. 1 is placed in the tank and burned. A tank which does not exhibit physical change or chemical change upon combustion of the gas generator is used.

When the gas generating agent burns upon activation of the gas generator, combustion gas is generated from the gas generating agent 6, and the internal pressure of the combustion chamber 7 rises. However, since the lower end of the outer tube 8 and the circular portion 12 of the diffuser 1 are not welded together, the housing receives this pressure and deforms as shown in Fig. 3. As a result of this deformation, the gap between the lower end of the outer tube 8 and the diffuser shell 1 expands. Next, the gas advances to the coolant/filter 42 where residues in the combustion gas are removed and the temperature of the gas is reduced. The gas then ruptures the sealing tape 44 and is discharged through the gas discharge ports 11.

Combustion of the gas generating agent advances from the diffuser side end surface 40 (in other words, the combustion starting end surface), which is ignited by the combustion products produced by the ignition device, and since the sectional area of the gas generating agent (in other words, the combustion surface area) increases at the curved portion "a", the amount of gas generated per unit time increases from this location. Accordingly, the gradient of the tank curve increases from the point of the curved portion "a" as the amount of gas generated per unit time increases. Hence, a gas generator which generates gas in a small amount at the initial operative stage and generates a sufficient amount of gas at the latter stage is obtained. Note that in the gas generator of Fig. 1, the gas generating agent 6 contacts the inner tube 9 and outer tube 8, and the form of the gas generating agent is determined by the form (inner diameter) of the outer tube 8. Hence, by adjusting the form of the outer tube 8, the output of the gas generator can be adjusted.

The same effects can be achieved by modifying the form (outer diameter) of the inner tube 9 instead of the outer tube 8, and also by modifying both outer tube 8 and inner tube 9.

Further, in the embodiment shown in Fig. 1, a housing, in which the diffuser side end portion of the outer tube 8 is welded to the circular portion 12 of the diffuser shell 1 and a gas flow hole is formed in the outer tube 8 in the vicinity of the diffuser shell 1, may be used. Moreover, the diffuser side end portion of the inner tube 9 may also be welded to the circular portion 12 of the diffuser shell 1, and a plurality of nozzles connecting the ignition device storage chamber 31 to the combustion chamber 7 may be formed in the peripheral wall portion of the inner tube 9 in the vicinity of the diffuser shell.

Fig. 4 is a sectional view of a gas generator 200 for an air bag according to another embodiment of the present invention. Identical components to those shown in Fig. 1 have been allocated identical reference numerals, and description thereof is omitted.

The gas generator shown in Fig. 4 differs from the gas generator shown in Fig. 1 particularly in the form of an outer tube 38. Accordingly, the form of a gas generating agent 36 which is disposed in contact with the outer tube 38 is also different. Similarly to the gas generator shown in Fig. 1, the transfer charge 5 stored in the ignition device storage chamber is ignited and burned upon activation of the igniter 4, and as a result, a diffuser side end portion 46 of the gas generating agent 36 is ignited and begins to burn. The inner periphery and outer periphery of the gas generating agent 36 contact the inner tube 9 and outer tube 38 respectively, and a closure side end portion 60 is disposed in contact with the circular portion 30 of the closure shell 2. Thus the gas generating agent can achieve end-face-burning with no combustion from the surfaces contacting these members.

The combustion products (a flame, high-temperature gas, thermo-particles, and so on) produced inside the ignition device storage chamber 31 enter the combustion chamber 7 which communicates with the chamber 31, thereby igniting and burning the diffuser side end portion. As combustion progresses, the gas generating agent generates combustion gas which increases the internal pressure of the combustion chamber and deforms the housing 3, thereby enlarging the gap between the outer tube 38 and the circular portion 12 of the diffuser shell 1. The combustion gas flows through this gap toward the filter 42, and as the gas passes through the filter 42, it is purified and cooled. The gas is then discharged through the gas discharge ports 11.

As the end-face-burning of the gas generating agent progresses such that the combustion face reaches a curved portion "b", the inner diameter of the outer tube 38 increases. Accordingly, the sectional area of the gas generating agent in contact therewith and the combustion surface area also increase, leading to an increase in the amount of gas generated per unit time. When combustion progresses further to reach the point of a curved portion "c", the diameter of the gas generating agent 36 decreases, and hence the combustion surface area and the amount of gas generated per unit time decrease. At the point of a subsequent curved portion "d", the combustion surface area and the amount of gas generated per unit time increase again.

Similarly to Fig. 2, Fig. 5 is a graph of a curve ("tank curve" hereafter) showing variation over time in the internal pressure of a sealed tank having a fixed volume (60 liters, for example) when the gas generator in Fig. 4 is placed in the tank and burned.

When the gas generator is activated, combustion of the gas generating agent advances from the diffuser side end portion 46, and at the location of the curved portion "b", the sectional area of the gas generating agent 36 increases, leading to an increase in the amount of gas generated per unit time from this point. This is reflected in the graph in Fig. 5. More specifically, the gradient of the tank curve in Fig. 5 (time-internal tank pressure curve) increases from the point of the curved portion "b" as the amount of gas generated per unit time increases. On the other hand, at the curved portion "c", the sectional area of the gas generating agent decreases, and hence the gradient of the tank curve shown in Fig. 5 becomes more gentle from the curved portion "c", indicating a decrease in the amount of gas generated per unit time. At the curved portion "d", the sectional area increases again, causing the gradient of the tank curve to become steeper and thereby indicating an increase in the amount of gas generated per unit time. In other words, with the gas generator 200 in Fig. 4, not only can gas be discharged steadily in the initial operative stage, but the gas discharge amount can also be adjusted in two stages.

Similarly to the gas generator in Fig. 1, the same effects can be achieved by modifying the form (outer diameter) of the inner tube 9 instead of the outer tube 38, and also by modifying both the outer tube 38 and inner tube 9.

Likewise in Fig. 4, the diffuser side end portion of the outer tube 38 may be welded to the circular portion 12 of the diffuser shell 1 and a gas flow hole may be formed in the outer tube 38 in the vicinity of the diffuser shell 1. Moreover, the diffuser side end portion of the inner tube 9 may also be fixed by welding to the circular portion 12 of the diffuser shell 1, and a plurality of nozzles communicating the ignition device storage chamber 31 with the combustion chamber 7 may be formed in the peripheral wall portion of the inner tube 9 in the vicinity of the diffuser shell.

Fig. 6 is an axial sectional view of a gas generator which is particularly suited to use in an air bag apparatus provided on a front passenger side. The overall shape of an inflator 300 shown in this drawing is formed substantially cylindrical so as to be suitable for use in an air bag system for a front passenger side. A housing 81 forming an outer shell container takes the form of a closed-end cylinder which is closed at one end 83 and open at an opposite side end portion. A closure 82 is attached to the open end portion. Gas discharge ports 80 are formed at equal intervals in the peripheral wall surface of the housing 81.

A cylindrical filter 84 is disposed in the interior space of the housing 81 formed as described above with a constant gap from the inner peripheral wall of the housing 81. An outer tube 86 is disposed on the inside of the cylindrical filter 84 with a constant gap from the inner peripheral surface of the filter 84, and an inner tube 88 is disposed on the inside of the outer tube 86 so as to secure a space into which a gas generating agent 89 is charged. In this embodiment, the filter 84, outer tube 86, and inner tube 88 are all disposed concentrically with the housing 81. An igniter storage space 90 is formed in the interior of the inner tube 88, and an igniter 91 is disposed in the storage space 90 together with a transfer charge 96 that is ignited by the igniter 91. A communication hole 92 is formed in the outer tube 86 on the closed end surface 83 side of the housing 81, and this communication hole 92 is sealed by a sealing member (sealing tape or the like) 93. A communication hole 94 is also formed in the inner tube 88 on the side of the closed end surface 83 of the housing 81. A combustion starting end surface 95 of the gas generating agent 89 is provided on the side of the closed end surface 83, and hence end-face-burning is performed from this surface toward the final end surface (on the closure 82 side).

In the gas generator 300, the transfer charge 96 is burned upon activation of the igniter 91, and the high-temperature gas generated as a result passes through the communication hole 94 together with heat residue and the like to reach the combustion starting end surface 95, where combustion of the gas generating agent 89 begins. The gas generated as a result raises the internal pressure, thereby rupturing the sealing member 93, and passes through the communication hole 92 to reach the filter 84. The gas is filtered and cooled as it passes through the filter 84, and then discharged through the gas discharge ports 80.

Note that the communication hole 92 may be formed in a position that is offset from the communication hole 94 to make the communication hole 92 less likely to be directly affected by the combustion products that has passed through the communication hole 94.

In the gas generator 300, the inner diameter of the inner tube 88 is larger on the side of the closed end surface 83 of the housing 81 than at the part denoted by the reference symbol "a" in Fig. 6, and accordingly, the sectional area of the gas generating agent 89 is larger at the final end surface side (closure 82 side) than at the reference symbol a. Hence, when the end-face-burning of the gas generating agent progresses such that the combustion face reaches the part denoted by the reference symbol "a", the combustion surface area increases from this point, enabling an increase in the amount of gas generated per unit time. Thus the combustion pattern of the gas generating agent can be illustrated by an output curve such as that shown in Fig. 2.

Note that these embodiments were described on the basis of a case in which the present invention is applied in particular to a pyrotechnic gas generator using a solid gas generating agent disposed within a housing. However, the present invention may be used in a hybrid gas generator which also uses a pressurized gas.

## Claims

1. A gas generator (100;200;300) comprising, in the interior of a housing (3;81) having a gas discharge port (11;80), a gas generating agent (6;36;89) that generates a gas by burning and an ignition device (4,5;91,96) for igniting and burning the gas generating agent (6;36;89),
**characterized by:**
the gas generating agent (6;36;89) being formed in lump form such that all or a part thereof is capable of end-face-buming; and
the gas generating agent (6;36;89) taking an overall form or structure according to which a combustion surface area (40;46;95) thereof varies as the gas generating agent (6;36;89) is burned.

2. The gas generator (100;200;300) according to claim 1, the gas generating agent (6;36;89) being disposed inside a gas generating agent (6;36;89) chamber (7) provided within a housing (8,9;38;86,88) and being in a condition enabling end-face-burning.

3. The gas generator (100;200;300) according to claim 1, further comprising: a combustion-restricting means (8,9;38;86,88) for restricting the combustion of the gas generating agent (6;36;89) being provided on all surfaces of the gas generating agent (6;36;89) other than a combustion starting end surface (40;46;95) to be ignited and burned by the ignition device (4,5;91,96).

4. The gas generator (100;200;300) according to claim 3, wherein the gas generating agent (6;36;89) takes a substantially columnar form having a through hole which penetrates axially,
the combustion restricting member (8,9;38;86;88) also defines a gas generating agent chamber (7) in which the gas generating agent (6;36;89) exists, and
an outer peripheral surface, an inner peripheral surface, and an opposite side end surface (32;60) to the combustion starting end surface (40;46;95) of the gas generating agent (6;36;89) all contact the combustion restricting member (8,9;38;86;88).

5. The gas generator (100;200;300) according to claim 4, wherein at least one of an inner diameter of a member forming an outer peripheral side wall (8;38;86) of the gas generating agent chamber (7) and an outer diameter of a member forming an inner peripheral side wall (9;88) of the gas generating agent chamber (7) varies axially.

6. The gas generator (100;200;300) according to claim 3, wherein the gas generating agent (6;36;89) takes a substantially columnar form not having a through hole,
the combustion restricting member (8,9;38;86;88) also defines a gas generating agent chamber (7) in which the gas generating agent (6;36;89) exists, and
an outer peripheral surface and an opposite side end surface (32;60) to the combustion starting end surface (40;46;95) of the gas generating agent (6;36;89) contact the combustion restricting member (8,9;38;86;88).

7. The gas generator (100;200;300) according to claim 6, wherein an inner diameter of a member forming an outer peripheral side wall (8;38;86) of the gas generating agent chamber (7) varies axially.

8. The gas generator (100;200;300) according to any one of claims 1, 2, and 3, wherein the sectional area of the gas generating agent (6;36;89) orthogonal to a combustion progression direction thereof varies in the combustion progression direction of the gas generating agent (6;36;89).

9. The gas generator (100;200;300) according to any one of claims 2, 3 and 4, wherein all or a part of a member forming the gas generating agent chamber (7) forms the housing (8,9;38;86,88).

10. The gas generator (100;200;300) according to any one of claims 2, 3 and 4, wherein the ignition device (4,5;91,96) comprises an operation-starting means (4;91) for starting an operation of the gas generator (100;200;300) and are disposed in an ignition device chamber (31 ;90) defined inside an inner peripheral side wall(9;88) of the gas generating agent chamber (7),
the operation starting device (4:91) is provided at one axial end side of the ignition device chamber (31 ;90), and
the combustion starting end surface (40;46;95) exists on the opposite side of the gas generating agent chamber (7) to the operation-starting means (4:91).

11. The gas generator (100;200;300) according to any one of claims 2, 3 and 4, wherein the gas generating agent (6;36;89) exists in a container formed by the member (8,9;38;86,88) forming the gas generating agent chamber (7), or in a container stored in the gas generating agent chamber (7).

12. The gas generator (100;200;300) according to any one of claims 1, 2 and 3, wherein the gas generating agent (6;36;89) contains a fuel and an oxidant, the fuel comprises at least one type selected from the group consisting of RDX, HMX, 5-nitrotetrazole, 1H-tetrazole, 5-aminotetrazole, 1H-tetrazole-1, 5-diamine, guanidine nitrate, mono-amine guanidine nitrate, carbodihydrazide, triamine guanidine nitrate, 1, 2, 4-triazole-3-on, 5, 5'-bi-1H-tetrazole, dicyandiamide, azodicarbonamide, glycine, semicarbazone, 1 H-1, 2, 4-triazole-3, 5-diamine, 4-amino guanazole, and guanylurea nitrate, and
the oxidant comprises at least one selected from the group consisting of potassium perchlorate, ammonium perchlorate, sodium perchlorate, strontium perchlorate, potassium nitrate, ammonium nitrate, sodium nitrate, and strontium nitrate.

13. The gas generator (100;200;300) according to any one of claims 1, 2, and 3, wherein one of the following combustion accelerators (i) and (ii) is mixed into and dispersed through the gas generating agent (6;36;89):
(i) a combustion accelerator which contributes directly to combustion of the gas generating agent (6;36;89) by burning itself in order to further raise the combustion temperature; and
(ii) a combustion accelerator which does not contribute directly to combustion of the gas generating agent (6;36;89), but provides conditions for accelerating the combustion.

14. The gas generator (100;200;300) according to claim 13,
wherein the combustion accelerator comprises one of the following bases (a) through (c), and the average particle diameter of one particle thereof is between 1 and 1000 µm:
(a) a base including a fuel and an oxidant and having a higher combustion temperature than the gas generating agent (6;36;89) in which the base is mixed and dispersed;
(b) a base including hollow micro-particles, which accelerates combustion of the gas generating agent (6;36;89) by increasing the combustion surface area of the gas generating agent (6;36;89) at one of the combustion stages of the gas generating agent (6;36;89) in which the base is mixed and dispersed; and
(c) a base including metallic particles.

15. The gas generator (100;200;300) according to any one of claims 1, 2, and 3, wherein a reinforcing member for preventing breakage at the combustion starting end surface (40;46;95) of the gas generating agent (6;36;89) is provided at the combustion starting end surface (40;46;95).

16. The gas generator (100;200;300) according to any one of claims 1, 2 and 3, wherein an ignition aid containing a material that has a greater ignitability than the gas generating agent (6;36;89) is provided at the combustion starting end surface (40;46;95) of the gas generating agent (6;36;89).

17. The gas generator (100;200;300) according to claim 16, wherein the ignition aid is a film-form member coated on one surface or both surfaces thereof with a transfer charge.

18. The gas generator (100;200;300) according to claim 16, wherein the ignition aid is a porous thin plate member impregnated with a transfer charge.

19. The gas generator (100;200;300) according to claim 16, wherein the ignition aid is a slurry-form substance mixed with a transfer charge, which is cured on the combustion starting end surface (40;46;95) of the gas generating agent (6;36;89).

20. A method of manufacturing a gas generator (100;200;300) comprising a gas generating agent (6;36;89) that generates a gas by burning and an ignition device (4,5;91,96) for igniting and burning the gas generating agent (6;36;89) in the interior of a housing (3;81) having a gas discharge port (11;80), **characterized by:** comprising the steps of:
charging a gas generating agent chamber (7) with a fluid-state gas generating agent (6;36;89); or
charging a container formed by a member (8,9;38;86;88) that comprises said gas generating agent chamber (7), or the interior of a container stored in the gas generating agent chamber (7), with said fluid-state gas generating agent (6;36;89), and
curing the fluid-state gas generating agent (6;36;89) to form a lump-form gas generating agent (6;36;89) having a combustion starting end surface (40;46;95) and a form or structure according to which a combustion surface area (40;46;95) thereof varies as the gas generating agent (6;36;89) is burned, and incorporating the container charged with the cured gas generating agent (6;36;89) in the interior of the housing.

## Patentansprüche

1. Ein Gasgenerator (100; 200; 300), umfassend, im Inneren eines Gehäuses (3; 81) mit einem Gasauslasskanal (11; 80): einen Gas erzeugenden Stoff (6; 36; 89), der ein Gas durch Verbrennen erzeugt, und eine Zündeinrichtung (4, 5; 91, 96) zum Entzünden und zum Verbrennen des Gas erzeugenden Stoffes (6; 36; 89),
**dadurch gekennzeichnet, dass**
der Gas erzeugende Stoff (6; 36; 89) in einer Körperform derart ausgebildet ist, dass er insgesamt oder zu einem Teil davon in der Lage ist zu einem Brennen an einer endseitigen Fläche; wobei der Gas erzeugende Stoff (6; 36; 89) eine Gesamtform oder -struktur annimmt, in Einklang mit welcher ein Verbrennungsoberflächenbereich (40; 46; 95) davon variiert, wenn der Gas erzeugende Stoff (6; 36; 89) verbrannt wird.

2. Der Gasgenerator (100; 200; 300) im Einklang mit Anspruch 1, wobei der Gas erzeugende Stoff (6; 36; 89) im Innern einer Kammer (7) für einen Gas erzeugenden Stoff (6; 36; 89) angeordnet ist, die innerhalb eines Gehäuses (8, 9; 38; 86; 88) ausgebildet ist, wobei er sich in einem Zustand befindet, welcher das Brennen an einer endseitigen Fläche ermöglicht.

3. Der Gasgenerator (100; 200; 300) im Einklang mit Anspruch 1, ferner umfassend: ein Verbrennungsbeschränkungsmittel (8, 9; 38; 86; 88) zum Beschränken der Verbrennung des Gas erzeugenden Stoffes (6; 36; 89), das an allen Oberflächen des Gas erzeugenden Stoffes (6; 36; 89) mit Ausnahme einer endseitigen Verbrennungsstartoberfläche (40; 46; 95) angeordnet ist, die durch die Zündeinrichtung (4, 5; 91; 96) zu entzünden und zu verbrennen ist.

4. Der Gasgenerator (100; 200; 300) im Einklang mit Anspruch 3, wobei der Gas erzeugende Stoff (6; 36; 89) eine im Wesentlichen säulenförmige Gestalt einnimmt, mit einer Durchgangsöffnung, welche in einer axialen Art und Weise durchdringt, wobei das Verbrennungsbeschränkungselement (8, 9; 38; 86; 88) ebenso eine Kammer (7) für den Gas erzeugenden Stoff (6; 36; 89) definiert, in welcher der Gas erzeugende Stoff (6; 36; 89) vorliegt, wobei eine äußere umfangsseitige Fläche, eine innere umfangsseitige Fläche, und eine endseitige Fläche (32; 60) auf der gegenüberliegenden Seite zu der endseitigen Verbrennungsstartoberfläche (40; 46; 95) des Gas erzeugenden Stoffes (6; 36; 89) sich allesamt mit dem Verbrennungsbeschränkungselement (8, 9; 38; 86; 88) in Kontakt befinden.

5. Der Gasgenerator (100; 200; 300) im Einklang mit Anspruch 4, wobei zumindest ein innerer Durchmesser eines Elements zum Ausbilden einer äußeren umfangsseitigen Seitenwand (8, 38; 86) der Kammer (7) für den Gas erzeugenden Stoff (6; 36; 89) oder ein äußerer Durchmesser eines Elements zum Ausbilden einer inneren umfangsseitigen Seitenwand (9; 88) der Kammer (7) für den Gas erzeugenden Stoff (6; 36; 89) in einer axialen Art und Weise variiert.

6. Der Gasgenerator (100; 200; 300) im Einklang mit Anspruch 3, wobei der Gas erzeugende Stoff (6; 36; 89) eine im Wesentlichen säulenförmige Gestalt einnimmt und keine Durchgangsöffnung aufweist, wobei das Verbrennungsbeschränkungseiemeni (8, 9; 38; 86; 88) ebenfalls eine Kammer (7) für den Gas erzeugenden Stoff (6; 36; 89) definiert, in welcher der Gas erzeugende Stoff (6; 36; 89) vorliegt, wobei eine äußere umfangsseitige Oberfläche und eine endseitige Oberfläche (32; 60) auf der gegenüberliegenden Seite zu der endseitigen Verbrennungsstartoberfläche (40; 46; 95) des Gas erzeugenden Stoffes (6; 36; 89) sich mit dem Verbrennungsbeschränkungselement (8, 9; 38; 86; 88) in Kontakt befinden.

7. Der Gasgenerator (100; 200; 300) im Einklang mit Anspruch 6, wobei ein innerer Durchmesser eines Elements zum Ausbilden einer äußeren umfangsseitigen Seitenwand (8; 38; 89) der Kammer (7) für den Gas erzeugenden Stoff (6; 36; 89) in einer axialen Art und Weise variiert.

8. Der Gasgenerator (100; 200; 300) im Einklang mit einem der Ansprüche 1, 2 und 3, wobei der Querschnittsbereich des Gas erzeugenden Stoffes (6; 36; 89) orthogonal zu einer Richtung des Fortschreitens der Verbrennung, in der Richtung des Fortschreitens der Verbrennung des Gas erzeugenden Stoffes (6; 36; 89) variiert.

9. Der Gasgenerator (100; 200; 300) im Einklang mit einem der Ansprüche 2, 3 und 4, wobei ein Element zum Ausbilden der Kammer (7) für den Gas erzeugenden Stoff (6; 36; 89) insgesamt oder nur ein Teil davon das Gehäuse (8, 9; 38; 86; 88) bildet.

10. Der Gasgenerator (100; 200; 300) im Einklang mit einem der Ansprüche 2, 3 und 4, wobei die Zündeinrichtung (4, 5; 91; 96) ein Operationsstartmittel (4; 91) zum Starten einer Operation des Gasgenerators (100; 200; 300) umfasst, das in einer Zündeinrichtungskammer (31; 90) angeordnet ist, die im Innern einer inneren umfangsseitigen Seitenwand (9; 88) der Kammer (7) für den Gas erzeugenden Stoff (6; 36; 89) definiert ist, wobei die Operationsstarteinrichtung (4; 91) an einer axialen Endseite der Zündeinrichtungskammer (31; 90) ausgebildet ist, und wobei die endseitige Verbrennungsstartoberfläche (40; 46; 95) auf der zu dem Operationsstartmittel (4; 91) gegenüberliegenden Seite der Kammer (7) für den Gas erzeugenden Stoff (6; 36; 89) existiert.

11. Der Gasgenerator (100; 200; 300) im Einklang mit einem der Ansprüche 2, 3 und 4, wobei der Gas erzeugende Stoff (6; 36; 89) in einem Behälter vorliegt, der durch das Element (8, 9; 38; 86; 88) zum Formen der Kammer (7) für den Gas erzeugenden Stoff (6; 36; 89) geformt ist, oder in einem Behälter, der in der Kammer (7) für den Gas erzeugenden Stoff (6; 36; 89) gespeichert ist.

12. Der Gasgenerator (100; 200; 300) im Einklang mit einem der Ansprüche 1, 2 und 3, wobei der Gas erzeugende Stoff (6; 36; 89) einen Treibstoff und einen Oxidanten enthält, wobei der Treibstoff zumindest eine Sorte umfasst, die ausgewählt ist aus der Gruppe bestehend aus RDX, HMX, 5-nitrotetrazol, 1 H-tetrazol, 5-aminotetrazol, 1H-tetrazol-1, 5-diamin, Guanidinnitrat, Mono-aminguanidinnitrat, Carbodihydrazid, Triaminguanidinnitrat, 1, 2, 4-triazol-3-on, 5, 5'-bi-1H-tetrazol, Dicyandiamid, Azodicarbonamid, Glycin, Semicarbazon, 1H-1, 2, 4-triazol-3, 5-diamin, 4-aminguanazol und Guanylureanitrat, und der Oxidant zumindest eine Sorte umfasst, die ausgewählt ist aus der Gruppe bestehend aus Potassiumperchlorat, Ammoniumperchlorat, Natriumperchlorat, Strontiumperchlorat, Potassiumnitrat, Ammoniumnitrat, Natriumnitrat und Strontiumnitrat.

13. Der Gasgenerator (100; 200; 300) im Einklang mit einem der Ansprüche 1, 2 und 3, wobei einer der folgenden Verbrennungsbeschleuniger (i) und (ii) in den Gas erzeugenden Stoff (6; 36; 89) eingemischt und verteilt ist:
(i) ein Verbrennungsbeschleuniger, welcher in einer unmittelbaren Art und Weise zu der Verbrennung des Gas erzeugenden Stoffes (6; 36; 89) beiträgt, indem er selbst brennt, um die Verbrennungstemperatur weiter anzuheben; und
(ii) ein Verbrennungsbeschleuniger, welcher nicht in einer unmittelbaren Art und Weise zu der Verbrennung des Gas erzeugenden Stoffes (6; 36; 89) beiträgt, aber Bedingungen für eine Beschleunigung der Verbrennung bereitstellt.

14. Der Gasgenerator (100; 200; 300) im Einklang mit Anspruch 13, wobei der Verbrennungsbeschleuniger eine der folgenden Basen (a) bis (c) umfasst, wobei der durchschnittliche Partikeldurchmesser eines Partikels davon zwischen 1 und 1000 µm liegt:
(a) eine Basis umfassend einen Treibstoff und einen Oxidanten, und mit einer höheren Verbrennungstemperatur als der Gas erzeugende Stoff (6; 36; 89), in welchen die Basis eingemischt und verteilt ist;
(b) eine Basis umfassend hohle Mikropartikel, welche eine Verbrennung des Gas erzeugenden Stoffes (6; 36; 89) beschleunigen, durch Anhebung des Verbrennungsoberflächenbereichs des Gas erzeugenden Stoffes (6; 36; 89) in einer der Verbrennungsstufen des Gas erzeugenden Stoffes (6; 36; 89), in welchen die Basis eingemischt und verteilt ist; und
(c) eine Basis umfassend Metallpartikel.

15. Der Gasgenerator (100; 200; 300) im Einklang mit einem der Ansprüche 1, 2 und 3, wobei ein Verstärkungselement zum Verhindern eines Bruchs an der endseitigen Verbrennungsstartoberfläche (40; 46; 95) des Gas erzeugenden Stoffes (6; 36; 89) an der endseitigen Verbrennungsstartoberfläche (40; 46; 95) bereitgestellt ist.

16. Der Gasgenerator (100; 200; 300) im Einklang mit einem der Ansprüche 1, 2 und 3, wobei eine Zündhilfe, umfassend ein Material, das eine größere Zündfähigkeit als der Gas erzeugende Stoff (6; 36; 89) aufweist, an der endseitigen Verbrennungsstartoberfläche (40; 46; 95) des Gas erzeugenden Stoffes (6; 36; 89) bereitgestellt ist.

17. Der Gasgenerator (100; 200; 300) im Einklang mit Anspruch 16, wobei die Zündhilfe ein filmförmiges Element ist, das an einer Oberfläche oder an beiden Oberflächen davon mit einer Transferladung beschichtet ist.

18. Der Gasgenerator (100; 200; 300) im Einklang mit Anspruch 16, wobei die Zündhilfe ein poröses, dünnes und plattenförmiges Element ist, das mit einer Transferladung imprägniert ist.

19. Der Gasgenerator (100; 200; 300) im Einklang mit Anspruch 16, wobei die Zündhilfe eine breiförmige Substanz ist, die mit einer Transferladung vermischt ist, welche an der endseitigen Verbrennungsstartoberfläche (40; 46; 95) des Gas erzeugenden Stoffes (6; 36; 89) ausgehärtet ist.

20. Ein Verfahren zum Herstellen eines Gasgenerators, umfassend einen Gas erzeugenden Stoff (6; 36; 89), welcher ein Gas durch Brennen erzeugt, und eine Zündeinrichtung (4, 5; 91; 96) zum Entzünden und Verbrennen des Gas erzeugenden Stoffs (6; 36; 89) im Inneren eines Gehäuses (3; 81) mit einem Gasauslasskanal (11; 80), **gekennzeichnet durch** das Umfassen der folgenden Schritte: Befüllen einer Kammer (7) für einen Gas erzeugenden Stoff (6; 36; 89) mit einem Gas erzeugenden Stoff (6; 36; 89) in einem Fluid-Zustand; oder Befüllen eines Behälters, der **durch** ein Element (8, 9; 38; 86; 88) geformt wird, das die besagte Kammer (7) für den Gas erzeugenden Stoff (6; 36; 89) enthält, oder des Innenraums eines in der Kammer (7) für den Gas erzeugenden Stoff (6; 36; 89) gespeicherten Behälters, mit dem besagten Gas erzeugenden Stoff (6; 36; 89) in dem Fluid-Zustand, und Aushärten des Gas erzeugenden Stoffes (6; 36; 89) in dem Fluid-Zustand, um einen körperförmigen Gas erzeugenden Stoff (6; 36; 89) mit einer endseitigen Verbrennungsstartoberfläche (40; 46; 95) und einer Form oder Struktur auszubilden, im Einklang mit welcher ein Verbrennungsoberflächenbereich (40; 46; 95) davon variiert, wenn der Gas erzeugende Stoff (6; 36; 89) verbrannt wird, und Einbauen des mit dem ausgehärteten Gas erzeugenden Stoff (6; 36; 89) befüllten Behälters in das Innere des Gehäuses.

## Revendications

1. Générateur de gaz (100 ; 200 ; 300) comprenant, dans l'intérieur d'un boîtier (3 ; 81) ayant un orifice d'évacuation de gaz (11 ; 80), un agent de génération de gaz (6 ; 36 ; 89) qui génère un gaz par combustion et un dispositif d'allumage (4, 5 ; 91, 96) pour allumer et brûler l'agent de génération de gaz (6 ; 36 ; 89),
**caractérisé en ce que** l'agent de génération de gaz (6 ; 36 ; 89) est formé sous une forme de masse de sorte que l'ensemble ou une partie de celle-ci soit capable de brûler par une face d'extrémité ; et
l'agent de génération de gaz (6 ; 36 ; 89) prenant une forme ou structure générale selon laquelle une région de surface de combustion (40 ; 46 ; 95) de celle-ci varie à mesure que l'agent de génération de gaz (6 ; 36 ; 89) est brûlé.

2. Générateur de gaz (100 ; 200 ; 300) selon la revendication 1, l'agent de génération de gaz (6 ; 36 ; 89) étant disposé à l'intérieur d'une chambre (7) d'agent de génération de gaz (6 ; 36 ; 89) prévue dans un boîtier (8, 9 ; 38 ; 86, 88) et étant dans un état permettant une combustion de face d'extrémité.

3. Générateur de gaz (100 ; 200 ; 300) selon la revendication 1, comprenant en outre : un moyen limitant la combustion (8, 9 ; 38 ; 86, 88) pour limiter la combustion de l'agent de génération de gaz (6 ; 36 ; 89) prévu sur toutes les surfaces de l'agent de génération de gaz (6 ; 36 ; 89) autres qu'une surface d'extrémité de démarrage de combustion (40 ; 46 ; 95) destinée à être allumée et brûlée par le dispositif d'allumage (4, 5 ; 91, 96).

4. Générateur de gaz (100 ; 200 ; 300) selon la revendication 3, dans lequel l'agent de génération de gaz (6 ; 36 ; 89) prend une forme sensiblement colonnaire ayant un trou traversant qui pénètre axialement,
l'élément limitant la combustion (8, 9 ; 38 ; 86 ; 88) définit également une chambre d'agent de génération de gaz (7) dans laquelle existe l'agent de génération de gaz (6 ; 36 ; 89), et
une surface périphérique extérieure, une surface périphérique intérieure, et une surface d'extrémité latérale opposée (32 ; 60) à la surface d'extrémité de démarrage de combustion (40 ; 46 ; 95) de l'agent de génération de gaz (6 ; 36 ; 89) tous entrant en contact avec l'élément limitant la combustion (8, 9 ; 38 ; 86 ; 88).

5. Générateur de gaz (100 ; 200 ; 300) selon la revendication 4, dans lequel au moins l'un parmi un diamètre intérieur d'un élément formant une paroi latérale périphérique extérieure (8 ; 38 ; 86) de la chambre d'agent de génération de gaz (7) et un diamètre extérieur d'un élément formant une paroi latérale périphérique intérieure (9 ; 88) de la chambre d'agent de génération de gaz (7) varie axialement.

6. Générateur de gaz (100 ; 200 ; 300) selon la revendication 3, dans lequel l'agent de génération de gaz (6 ; 36 ; 89) prend une forme sensiblement colonnaire n'ayant pas un trou traversant,
l'élément limitant la combustion (8, 9 ; 38 ; 86 ; 88) définit également une chambre d'agent de génération de gaz (7) dans laquelle existe l'agent de génération de gaz (6 ; 36 ; 89) et
une surface périphérique extérieure et une surface d'extrémité latérale opposée (32 ; 60) à la surface d'extrémité de démarrage de combustion (40 ; 46 ; 95) de l'agent de génération de gaz (6 ; 36 ; 89) entre en contact avec l'élément limitant la combustion (8, 9 ; 38 ; 86 ; 88).

7. Générateur de gaz (100 ; 200 ; 300) selon la revendication 6, dans lequel un diamètre intérieur d'un élément formant une paroi latérale périphérique extérieure (8 ; 38 ; 86) de la chambre d'agent de génération de gaz (7) varie axialement.

8. Générateur de gaz (100 ; 200 ; 300) selon l'une quelconque des revendications 1, 2, et 3, dans lequel la section de l'agent de génération de gaz (6 ; 36 ; 89) orthogonale à une direction de progression de combustion de celle-ci varie dans la direction de progression de combustion de l'agent de génération de gaz (6 ; 36 ; 89).

9. Générateur de gaz (100 ; 200 ; 300) selon l'une quelconque des revendications précédentes 2, 3 et 4, dans lequel l'ensemble ou une partie d'un élément formant la chambre d'agent de génération de gaz (7) forme le boîtier (8, 9 ; 38 ; 86, 88).

10. Générateur de gaz (100 ; 200 ; 300) selon l'une quelconque des revendications 2, 3 et 4, dans lequel le dispositif d'allumage (4, 5 ; 91, 96) comprend un moyen de démarrage d'actionnement (4 ; 91) pour démarrer un actionnement du générateur de gaz (100 ; 200 ; 300) et est disposé dans une chambre de dispositif d'allumage (31 ; 90) définie à l'intérieur d'une paroi latérale périphérique intérieure (9 ; 88) de la chambre d'agent de génération de gaz (7), le dispositif de démarrage d'actionnement (4 ; 91) est prévu à un côté d'extrémité axiale de la chambre de dispositif d'allumage (31 ; 90), et
la surface d'extrémité de démarrage de combustion (40 ; 46 ; 95) existe sur le côté opposé de la chambre d'agent de génération de gaz (7) au moyen de démarrage d'actionnement (4 ; 91).

11. Générateur de gaz (100 ; 200 ; 300) selon l'une quelconque des revendications 2, 3 et 4, dans lequel l'agent de génération de gaz (6 ; 36 ; 89) existe dans un récipient formé par l'élément (8, 9 ; 38 ; 86, 88) formant la chambre d'agent de génération de gaz (7), ou dans un récipient stocké dans la chambre d'agent de génération de gaz (7).

12. Générateur de gaz (100 ; 200 ; 300) selon l'une quelconque des revendications 1, 2 et 3, dans lequel l'agent de génération de gaz (6 ; 36 ; 89) contient un combustible et un oxydant, le combustible comprenant au moins un type choisi parmi le groupe consistant en RDX, HMX, 5-nitrotétrazole, 1H-tétrazole, 5-aminotétrazole, 1 H-tétrazole-1,5-diamine, guanidine nitrate, monoamine guanidine nitrate, carbodihydrazide, triamine guanidine nitrate, 1,2,4-triazole-3-on, 5,5'-bi-1H-tétrazole, dicyandiamide, azodicarbonamide, glycine, semicarbazone, 1H-1,2,4-triazole-3,5-diamine, 4-amino guanazole, et guanylurée nitrate, et l'oxydant comprend l'un au moins choisi parmi le groupe consistant en perchlorate de potassium, perchlorate d'ammonium, perchlorate de sodium, perchlorate de strontium, nitrate de potassium, nitrate d'ammonium, nitrate de sodium, et nitrate de strontium.

13. Générateur de gaz (100 ; 200 ; 300) selon l'une quelconque des revendications 1, 2, et 3, dans lequel l'un des accélérateurs de combustion suivants (i) et (ii) est mélangé et dispersé parmi l'agent de génération de gaz (6 ; 36 ; 89) :
(i) un accélérateur de combustion qui contribue directement à la combustion de l'agent de génération de gaz (6 ; 36 ; 89) en brûlant lui-même afin d'augmenter encore la température de combustion ; et
(ii) un accélérateur de combustion qui ne contribue pas directement à la combustion de l'agent de génération de gaz (6 ; 36 ; 89), mais fournit des conditions pour accélérer la combustion.

14. Générateur de gaz (100 ; 200 ; 300) selon la revendication 13, dans lequel l'accélérateur de combustion comprend l'une parmi les bases suivantes (a) à (c), et le diamètre de particules moyen d'une particule de celle-ci est compris entre 1 et 1000 µm :
(a) une base comprenant un combustible et un oxydant ayant une température de combustion plus élevée que l'agent de génération de gaz (6 ; 36 ; 89) dans lequel la base est mélangée et dispersée ;
(b) une base comprenant des microparticules creuses, qui accélère la combustion de l'agent de génération de gaz (6 ; 36 ; 89) en augmentant la région de surface de combustion de l'agent de génération de gaz (6 ; 36 ; 89) à l'un des stades de combustion de l'agent de génération de gaz (6 ; 36 ; 89) dans lequel la base est mélangée et dispersée ; et
(c) une base comprenant des particules métalliques.

15. Générateur de gaz (100 ; 200 ; 300) selon l'une quelconque des revendications 1, 2, et 3, dans lequel un élément de renfort pour empêcher une cassure de la surface de région de démarrage de combustion (40 ; 46 ; 95) de l'agent de génération de gaz (6 ; 36 ; 89) est prévu à la surface d'extrémité de démarrage de combustion (40 ; 46 ; 95).

16. Générateur de gaz (100 ; 200 ; 300) selon l'une quelconque des revendications 1, 2 et 3, dans lequel une aide à l'allumage contenant un matériau qui présente une sensibilité à l'allumage supérieure à celle de l'agent de génération de gaz (6 ; 36 ; 89) est prévue à la surface d'extrémité de démarrage de combustion (40 ; 46 ; 95) de l'agent de génération de gaz (6 ; 36 ; 89).

17. Générateur de gaz (100 ; 200 ; 300) selon la revendication 16, dans lequel l'aide à l'allumage est un élément en forme de film revêtu sur une surface ou les deux surfaces de celui-ci avec une charge de transfert.

18. Générateur de gaz (100 ; 200 ; 300) selon la revendication 16, dans lequel l'aide à l'allumage est un élément en forme de plaque mince poreuse imprégnée avec une charge de transfert.

19. Générateur de gaz (100 ; 200 ; 300) selon la revendication 16, dans lequel l'aide à l'allumage est une substance en forme de pâte mélangée avec une charge de transfert, qui est durcie sur la surface d'extrémité de démarrage de combustion (40 ; 46 ; 95) de l'agent de génération de gaz (6 ; 36 ; 89).

20. Procédé de fabrication d'un générateur de gaz (100 ; 200 ; 300) comprenant un agent de génération de gaz (6 ; 36 ; 89) qui génère un gaz par combustion et un dispositif d'allumage (4, 5 ; 91, 96) pour allumer et brûler l'agent de génération de gaz (6 ; 36 ; 89) dans l'intérieur d'un boîtier (3 ; 80) ayant un orifice d'évacuation de gaz (11 ; 80),
**caractérisé en ce qu'**il comprend les étapes consistant à :
charger une chambre d'agent de génération de gaz (7) avec un agent de génération de gaz à l'état fluide (6 ; 36 ; 89) ; ou
charger un récipient formé par un élément (8, 9 ; 38 ; 86 ; 88) qui comprend ladite chambre d'agent de génération de gaz (7), ou l'intérieur d'un récipient stocké dans la chambre d'agent de génération de gaz (7), avec ledit agent de génération de gaz à l'état fluide (6 ; 36 ; 89) et
durcir l'agent de génération de gaz à l'état fluide (6 ; 36 ; 89) pour former un agent de génération de gaz sous forme de masse (6 ; 36 ; 89) ayant une surface d'extrémité de démarrage de combustion (40 ; 46 ; 95) et une forme ou structure selon laquelle une région de surface de combustion (40 ; 46 ; 95) de celle-ci varie à mesure que l'agent de génération de gaz (6 ; 36 ; 89) est brûlé, et
incorporer le récipient chargé avec l'agent de génération de gaz durci (6 ; 36 ; 89) dans l'intérieur du boîtier.
